# EUROPÄISCHE PATENTSCHRIFT

(11) **EP 3 261 791 B1**
(45) Veröffentlichungstag und Bekanntmachung des Hinweises auf die Patenterteilung: **14.02.2024**
(21) Anmeldenummer: 16705955.9
(22) Anmeldetag: 23.02.2016
(51) Int. Cl.: B23B 5/16, B23Q 11/00

(54) **VERFAHREN ZUR VERRINGERUNG DES REGENERATIVEN RATTERNS VON ZERSPANUNGSMASCHINEN, SOWIE EINE ZERSPANUNGSMASCHINE**
METHOD FOR REDUCING THE REGENERATIVE CHATTER OF CHIP-REMOVAL MACHINES, AS WELL AS A CHIP-REMOVAL MACHINE
PROCÉDÉ DE RÉDUCTION DU BROUTAGE RÉGÉNÉRATIF DE MACHINES À ENLÈVEMENT DE COPEAUX ET UNE MACHINE À ENLÈVEMENT DE COPEAUX

(30) Priorität: 27.02.2015 DE 102015002483
(43) Veröffentlichungstag der Anmeldung: 03.01.2018
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2016/053797
(87) Internationale Veröffentlichungsnummer: WO 2016/135157

(56) Entgegenhaltungen:
- EP-A1- 1 693 131
- DE-A1- 2 434 196
- DE-A1- 2 704 174
- DE-A1-102012 012 279
- JP-A- H10 128 635
- US-A- 2 699 696
- US-A- 3 820 422
- DATABASE WPI Week 198004 Thomson Scientific, London, GB; AN 1980-A8418C XP002757899, -& SU 660 785 A (DIAMOND CUT RADIAL) 10. Mai 1979 (1979-05-10)

## Beschreibung

Die Erfindung betrifft sowohl ein Verfahren zur Verringerung regenerativen Ratterns, insbesondere von Zerspanungsmaschinen, als auch die Zerspanungsmaschine. Zerspanungsmaschinen sind im Stand der Technik in Form von rotierenden Werkzeugköpfen für Rohrenden natürlich hinlänglich bekannt. Ein Werkzeugkopf ist beispielsweise in der EP 2 106 313 B1 offenbart.

In der US 2,699,696 ist ein Bohrkopf offenbart mit einer Spindel, an dessen äußerem Ende ein Raum für ein Zusatzgewicht vorgesehen ist, wobei der Raum mittels einer Kappe verschlossen werden kann. Der dort offenbarte Bohrkopf kann nachteiligerweise ausschließlich mit einem Zusatzgewicht verwendet werden.

In der DE 10 2009 009 212 B3 ist ein schwingungsgedämpftes Werkzeug zum Bearbeiten von Werkstücken beschrieben, wobei entlang des Umfanges eines Werkzeuggrundkörpers ein oder mehrere verschiebbare Schwingungstilger befestigt sind. Nachteilig an dem Werkzeug ist, dass die Schwingungstilger in ihrer Position vorab genau bestimmt werden müssen, um die Vibration möglichst optimal zu dämpfen.

In der JP H 101 28 635 ist ein Halter für ein Bohrwerkzeug beschrieben. Der Halter weist eine Vibrationsdämpfung auf, die außen um den Halter herumgelegt ist. Dieses Dokument offenbart ein Verfahren gemäß dem Oberbegriff des Anspruchs 1 sowie eine Maschine gemäß dem Oberbegriff des Anspruchs 2.

In der EP 1 693 131 A1 ist ein Schneidwerkzeug mit einer inneren Tasche offenbart, und in der Tasche ist ein bewegliches, vibrationsunterdrückendes Bauteil angeordnet.

In der DE 10 2012 012 279 A1 ist ein Schneidwerkzeug mit einem Kopf mit einem Hohlraum offenbart, in dem Wuchtelemente vorgesehen sind.

In der RU 660 785 ist ein Bohrer mit Wuchtelementen beschrieben. Des Weiteren werden vibrationshemmende Wuchtelemente im Inneren einer Bohrstange auch in der US 3,820,422, der US 2,699,696 und der DT 24 34 196 A1 offenbart.

Zerspanungsmaschinen mit rotierenden Werkzeugköpfen sind schwingungsfähige Körper, mit deren Hilfe abgelängte Rohrabschnitte nachbearbeitet werden. Insbesondere kann das Rohrabschnittsende mit einer Fase versehen werden. Zur Ausbildung von Fasen werden die Werkzeugköpfe in Verlängerung der Längsachse des Rohrabschnitts auf das Rohrende zugefahren, die Werkzeugköpfe rotieren und weisen eine oder mehrere Schneidplatten auf, mit deren Hilfe sowohl eine Innen- oder Außenfase als auch ein Planmaß auf das Rohrabschnittsende aufgebracht wird. Beim Aufbringen der Fasen und des Planmaßes werden Späne vom Rohrende abgehoben. Der Werkzeugkopf befindet sich am Ende einer rotierenden Spindel und ist mit der Spindel zusammen ein schwingungsfähiger Körper. Grundsätzlich sind sowohl die Außen- als auch die Innenwandungen der Rohrabschnitte nie exakt kreisförmig, so dass es beim Zerspanungsvorgang zu Lastwechseln kommt. Wenn die Lastwechsel im Bereich der Eigenfrequenz des an der Spindel montierten Werkzeugkopfes liegen, kann ein unerwünschtes Rattern entstehen. Zum einen belastet das Rattern die Zerspanungsmaschine, zum anderen wird die zu fertigende Werkstückoberfläche wellig, was zu Qualitätsverlusten führt. Möglicherweise wird das bearbeitete Werkstück sogar unbrauchbar.

Eine spezielle Form des Ratterns ist das sogenannte regenerative Rattern. Die Eigenschwingung des Werkzeugkopfes wird durch die bereits erzeugte Oberflächenwelligkeit, die durch das gleiche Schneidwerkzeug in der bereits vorbearbeiteten Oberfläche ausgebildet wurde, immer wieder angeregt. Es entsteht ein Rattern, das immer stärker wird.

Zur Vermeidung des regenerativen Ratterns gibt es im Stand der Technik verschiedene Lösungsansätze.

Beispielsweise werden bei mehrschneidigen Fräswerkzeugen oder Reibwerkzeugen die Schneiden in unterschiedlichen Abständen zueinander angeordnet und damit wird die Erregerfrequenz während des Schneidens ständig geändert. Die Folge davon ist, dass das regenerative Rattern im Idealfall gar nicht auftritt.

Bei einschneidigen Werkzeugen ist eine Änderung des Schneidenabstandes natürlich nicht möglich. Bekannt ist jedoch, dass eine Drehzahl des rotierenden Schneidwerkzeugs ständig schnell geändert wird, was jedoch bei hohen Frequenzen zu einer starken Maschinenbelastung führen kann.

Daneben sind auch aktive Dämpfungssysteme bekannt, bei denen die Schwingungen elektronisch erfasst werden und mittels einer Zusatzmasse die Eigenfrequenz des Systems verändert wird. Daneben gibt es passive Dämpfungssysteme, bei denen hydraulische Dämpfer oder zusätzliche Feder-Masse-Systeme vorgesehen sind, sogenannte Tilger, welche die Resonanzfrequenz weitgehend auslöschen.

Die genannten Systeme zur Vermeidung des regenerativen Ratterns sind jedoch ausgesprochen aufwändig und auch wartungsintensiv.

Es ist daher Aufgabe der Erfindung, ein einfacheres Verfahren zur Verringerung des regenerativen Ratterns wie auch eine Zerspanungsvorrichtung zur Verfügung zu stellen, bei der regeneratives Rattern weniger, vorzugsweise gar nicht auftritt.

In dem ersten Aspekt wird die Aufgabe durch ein Verfahren mit den Merkmalen des Anspruchs 1 gelöst.

Dabei wird ein Werkstück relativ zu einem Werkzeugkopf mit wenigstens einem Zerspanungswerkzeug rotiert. In einer Variante des Verfahrens kann der Werkzeugkopf relativ zu einer Zerspanungsmaschine ortsfest gehalten werden und das Werkstück rotiert werden.

In einer anderen Variante des erfindungsgemäßen Verfahrens wird das Werkstück relativ zur Zerspanungsmaschine ortsfest festgeklemmt und der Werkzeugkopf gegenüber dem Werkstück rotiert. Der Werkzeugkopf bearbeitet mittels des wenigstens einen Zerspanungswerkzeugs Wandungen des Werkstückes.

Bei dem Werkstück kann es sich insbesondere um metallische Werkstücke, insbesondere Eisen oder Stahlwerkstücke handeln; es sind jedoch auch andere Materialien denkbar. Das Werkstück weist vorzugsweise eine längliche Form auf. Es kann sich um ein Langprofil handeln, insbesondere um ein Rohr oder ein im Querschnitt kreisförmiges Vollprofil. Das Rohr kann einen über die gesamte Länge kreisförmigen Außen- und/oder Innendurchmesser aufweisen. Das Verfahren ist jedoch auch auf andere Werkstücke mit vorzugsweise kreisförmigem Innen- oder Außenquerschnitt anwendbar, wobei kreisförmig hier nicht die mathematisch exakte Kreisform, sondern auch geringe Abweichungen von der mathematisch exakten Kreisform umfasst. Das Verfahren ist insbesondere gerade auf diese realen Kreisformen anwendbar.

Das wenigstens eine Zerspanungswerkzeug ist an einem Ende des Werkzeugkopfes angeordnet. Dem wenigstens einen Zerspanungswerkzeug gegenüberliegend ist an einem anderen Ende des Werkzeugkopfes eine Aufnahme vorgesehen, mit der der Werkzeugkopf auf einer drehbaren, von der Zerspanungsmaschine angetriebenen Spindel befestigt wird. Der Werkzeugkopf kann mit Zusatzmasse leicht ausgetauscht werden.

Die Aufnahme ist vorzugsweise leicht handhabbar als Innengewinde ausgebildet, während die Spindel an einem äußeren Ende ein korrespondierendes Außengewinde aufweist.

Der Werkzeugkopf wird während der Bearbeitung zu Schwingungen angeregt. Durch die Schwingungen wird eine lockere Zusatzmasse bewegt. Die lockere Zusatzmasse berührt in ersten Stellungen zufällig den Werkzeugkopf, und in zweiten Stellungen weist die Zusatzmasse keine Verbindung mit dem Werkzeugkopf auf. Insbesondere weist die Zusatzmasse auch keine Feder-, Dämpfungs- oder sonstige Verbindung mit dem Werkzeugkopf auf, sondern die Zusatzmasse ist vorzugsweise in den zweiten Stellungen vollständig mit Luft umgeben und schwebt für kurze Zeit quasi im Raum. Dadurch wird die Masse des Werkzeugkopfes um die Zusatzmasse zufällig verändert, und durch die Masseänderung des Werkzeugkopfes wird das Schwingungsverhalten des Werkzeugkopfes verändert und so einem regenerativen Rattern entgegengewirkt.

Das erfindungsgemäße Verfahren macht von der Idee Gebrauch, einen Werkzeugkopf, der an einer drehbaren Spindel fest montiert ist und sich während des Bearbeitungsvorganges um eine Längsachse, die der Spindellängsachse entspricht, rotiert, in seinem Schwingungsverhalten zufällig zu verändern. Das Schwingungsverhalten des Werkzeugkopfes wird im Wesentlichen durch die Steifigkeit, insbesondere der Spindel, durch die Dämpfung wie auch durch die Masse des Werkzeugkopfes und der Spindel bestimmt. Dabei ergibt sich die Dämpfung dadurch, dass ein zur Schwingung aus der Längsrichtung heraus angeregter Werkzeugkopf von selbst in einen Ruhestand übergeht, aus dem sich die Dämpfung bestimmen lässt.

Das erfindungsgemäße Verfahren macht jedoch darüber hinaus von der Idee Gebrauch, die Masseänderung zufällig erfolgen zu lassen, indem eine Zusatzmasse locker am oder im Werkzeugkopf angeordnet wird.

Gemäß einem bekannten Verfahren kann der Werkzeugkopf einen zylinderförmigen Innenraum aufweisen, in dem sich eine zylinderförmige Zusatzmasse befindet. Die Zusatzmasse weist eine korrespondierende Außenwandung auf, die im Querschnitt streng kreisförmig ausgebildet ist und über die gesamte Längsausdehnung des Zylinders gleichbleibend kreisförmig ausgebildet ist, sowie zwei parallel zueinander verlaufende Stirnseiten, die senkrecht auf den korrespondierenden Wandungen stehen. Der Zylinder weist einen Radius auf, der etwas kleiner als ein Innenradius des zylinderförmigen Innenraumes des Werkzeugkopfes ausgebildet ist. Auch die Abstände der Stirnflächen der zylinderförmigen Aussparung sind etwas größer als eine Länge der zylinderförmigen Zusatzmasse zwischen deren Stirnseiten. Dadurch wird die zylinderförmige Zusatzmasse gleichsam locker, d. h. innerhalb eines Spieles in alle Richtungen frei beweglich, im Innenraum des Werkzeugkopfes angeordnet.

Während des Betriebs des Werkzeugkopfes liegt die Zusatzmasse mit ihrer korrespondierenden Außenwandung während der längeren Zeit an Innenwandungen der zylinderförmigen Aussparung des Werkzeugkopfes an. Wenn der Werkzeugkopf jedoch in kleine Schwingungen versetzt wird, wie beispielsweise zu Beginn eines sich aufbauenden regenerativen Ratterns, verliert die Zusatzmasse zufällig zu bestimmten Zeitpunkten und in kurzen Zeiträumen ihre berührende Verbindung mit der Innenwandung. Die Zusatzmasse schwebt gleichsam berührungslos im Innenraum des Werkzeugkopfes, wodurch sich die Masse des Werkzeugkopfes, die für die Bestimmung der Eigenfrequenz verantwortlich ist, reduziert und damit die Eigenfrequenz des Werkzeugkopfes verändert. Durch die Veränderung der Eigenfrequenz kann die für das regenerative Rattern verantwortliche periodische Stimulation des bereits schwingenden Werkzeugkopfes nicht mehr zu einem Aufschaukeln, d. h. einem bei jeder Umdrehung stärker werdenden Schwingungsverhalten führen, weil sich die Eigenfrequenz eben geändert hat.

Nach dem Abnehmen des Werkzeugkopfes von der Spindel ist der Innenraum frei zugänglich, und die Zusatzmasse kann entnommen oder ausgetauscht werden.

Gemäß dem erfindungsgemäßen Verfahren wird die Zusatzmasse ringförmig um eine Außenwandung des Werkzeugkopfes herumgelegt. Die Außenwandung des Werkzeugkopfes ist im Querschnitt senkrecht zur Längsrichtung kreisförmig ausgebildet und weist einen Radius auf, während eine Innenwandung der ringförmigen Zusatzmasse einen korrespondierenden Radius aufweist, der etwas größer als der Radius ist, so dass der Ring ebenfalls locker auf der Außenwandung des Werkzeugkopfes aufliegt. In ersten Stellungen berührt die korrespondierende Wandung des Ringes die Außenwandung des Werkzeugkopfes, in zweiten Stellungen hat die ringförmige Zusatzmasse überhaupt keine Verbindung, auch keine Berührung mit dem Werkzeugkopf; sie schwebt gleichsam um den Werkzeugkopf herum. Die Wirkungsweise ist entsprechend der oben genannten, und das oben Gesagte bezieht sich vollumfänglich auch auf diese Ausführungsform der Erfindung.

Die Aufgabe wird in ihrem zweiten Aspekt durch eine Zerspanungsmaschine mit den Merkmalen des Anspruchs 2 erfüllt.

Die Zerspanungsmaschine eignet sich insbesondere zur Durchführung eines der oben genannten Verfahren. Die Zerspanungsmaschine weist einen Werkzeugkopf mit wenigstens einem Zerspanungswerkzeug zur Bearbeitung einer Wandung eines Werkstücks auf sowie eine lockere Zusatzmasse, die gegenüber dem Werkzeugkopf verschiedene Stellungen aufweisen kann und die den Werkzeugkopf in ersten Stellungen berührt und die mit dem Werkzeugkopf in zweiten Stellungen keine Verbindung aufweist, und der Werkzeugkopf weist in ersten Stellungen ein erstes Schwingungsverhalten und in zweiten Stellungen ein zweites Schwingungsverhalten auf.

Hinsichtlich der Zerspanungsmaschine macht die Erfindung ebenfalls von der Idee Gebrauch, die Eigenfrequenzen des vorzugsweise an einer Spindel aufgehängten Werkzeugkopfes, der aus der Längsachse heraus in alle Richtungen schwingen kann, zu verändern, indem die Masse des Werkzeugkopfes verändert wird. Die Masseänderung des Werkzeugkopfes erfolgt jedoch nicht gesteuert oder mechanisch kontrolliert, sondern zufällig. Die Masse des Werkzeugkopfes ist erhöht, wenn die Zusatzmasse den Werkzeugkopf in ersten Stellungen berührt, und die Masse ist um die Zusatzmasse geringer, wenn der Werkzeugkopf keine Verbindung, auch keine Feder-, Dämpfungs- oder sonstige Verbindung mit dem Werkzeugkopf ausbildet. Durch die Masseänderung ändert sich das Schwingungsverhalten des Werkzeugkopfes, wodurch, wie oben gesagt, dem regenerativen Rattern entgegengewirkt wird. Es hat sich erstaunlicherweise gezeigt, dass diese einfache Variante des zufälligen Änderns der Masse des Werkzeugkopfes in ausgesprochen effektiver Weise dem regenerativen Rattern entgegenwirkt. Insbesondere können durch das regenerative Rattern erfolgte wellenförmige Unregelmäßigkeiten bei der Bearbeitung von Rohrenden fast vollständig vermieden werden.

Gemäß der Erfindung weist der Werkzeugkopf eine in Betrieb um eine Längsachse rotierende Wandung auf und die Zusatzmasse eine rotierende korrespondierende Wandung, wobei die korrespondierende Wandung entlang ihrer gesamten Ausdehnung in der zweiten Stellung von der rotierenden Wandung um ein Spiel beabstandet ist. Die Zusatzmasse und der Werkzeugkopf sind relativ zueinander beweglich, wobei der relative Bewegungsraum sehr gering ist und hier als Spiel bezeichnet wird. Das Spiel beträgt vorzugsweise wenige Millimeter und befindet sich ganz besonders bevorzugt lediglich im Mikrometerbereich. Während in ersten Stellungen die Zusatzmasse auf den Wandungen aufliegt, ist die Zusatzmasse in zweiten Stellungen vollständig mit Luft umgeben, sie schwebt gleichsam gegenüber dem Werkzeug.

Gemäß der Erfindung ist eine Außenwandung mit einem Radius ausgebildet und eine korrespondierende Wandung als korrespondierende Innenwandung eines Außenringes ausgebildet mit einem korrespondierenden Radius, der größer als der Radius ist. Dabei ist gleichsam ein Ring um einen Werkzeugkopf gesteckt, wobei der Ring mit einem Spiel locker auf dem Werkzeugkopf aufliegt und damit der Werkzeugkopf bei Berührung des Außenringes mit dem Werkzeugkopf eine um die Masse des Außenringes größere Masse ausbildet als zu den Zeitpunkten, zu denen der Außenring keinen Kontakt mit dem Werkzeugkopf hat.

In einer Ausführungsform ist die Außenwandung des Werkzeugkopfes als Zylinder ausgebildet.

Bei dem Zerspanungsvorgang handelt es sich hier um einen periodischen Vorgang, wobei Unregelmäßigkeiten in der bearbeiteten Werkzeugoberfläche periodisch mit dem Zerspanungswerkzeug in Berührung kommen und dieses periodisch anregen. Wenn diese periodische Anregung insbesondere mit der Eigenfrequenz des Werkzeugkopfes zusammenfällt, schaukelt sich die Schwingung zu einem regenerativen Rattern auf. Dieses ist sehr laut und kann zur Beschädigung des Zerspanungswerkzeuges wie auch zu einer ausgesprochen unebenen Werkstückoberfläche führen.

Die Erfindung wird anhand von zwei Ausführungsbeispielen in sieben Figuren beschrieben.

Dabei zeigen:
- Fig. 1: eine physikalische Prinzipansicht zur Erklärung des physikalischen Ratterns einer Zerspanungsmaschine beim Zerspanen einer Oberfläche,
- Fig. 2: eine physikalische Prinzipansicht zur Erläuterung der erfindungsgemäßen Zerspanungsmaschine mit einer Zusatzmasse,
- Fig. 3: eine Anordnung eines erfindungsgemäßen Werkzeugkopfes relativ zum Werkstück während des Zerspanungsvorganges,
- Fig. 4: eine perspektivische Ansicht eines bekannten Werkzeugkopfes,
- Fig. 5: eine Schnittansicht in Längsrichtung in Fig. 4 mit einer Innenmasse,
- Fig. 6: eine Ausführungsform eines erfindungsgemäßen Werkzeugkopfes,
- Fig. 7: eine Schnittansicht in Längsrichtung in Fig. 6 mit erfindungsgemäßer Außenmasse.

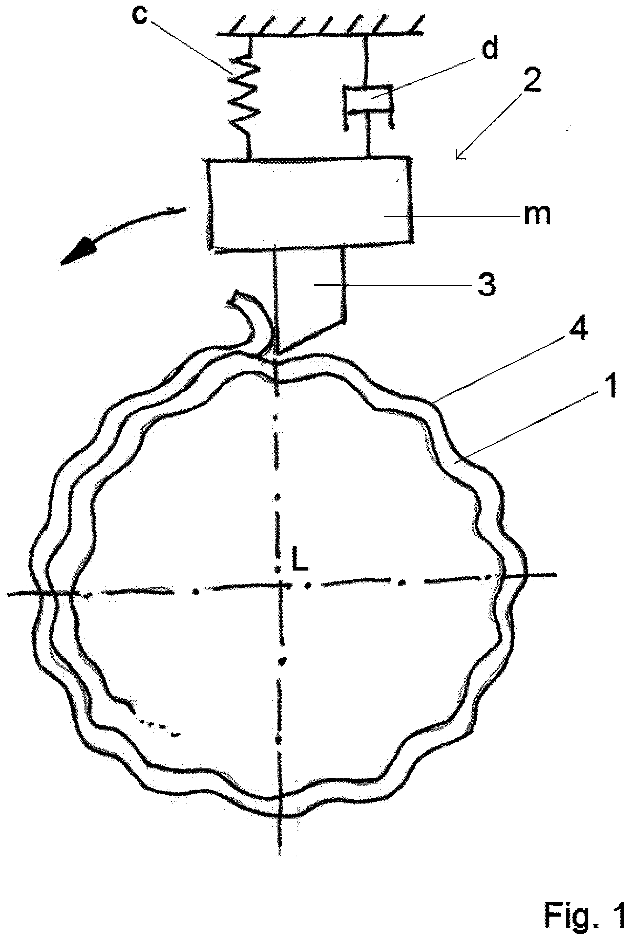

Fig. 1 zeigt schematisch ein im Wesentlichen im Querschnitt kreisrundes Werkstück, beispielsweise einen im Außenquerschnitt im Wesentlichen kreisrunden Rohrabschnitt 1. Es kann sich bei dem Werkstück jedoch auch um ein Vollprofil oder ein abschnittweises Voll- und Hohlprofil handeln. Das Werkstück besteht vorzugsweise aus Metall, besonders bevorzugt aus Stahl; es können jedoch auch andere Materialien vorgesehen sein. Der Rohrabschnitt 1 wird von einem Werkzeugkopf 2 bearbeitet, der in der schematischen Ansicht genau eine einzelne Schneidplatte 3 aufweist. Der Werkzeugkopf 2 kann natürlich auch zwei, drei oder jede höhere Anzahl an Schneidplatten 3 aufweisen. Der Werkzeugkopf 2 und der Rohrabschnitt 1 rotieren relativ zueinander. Dabei kann der Werkzeugkopf 2 im Raum und gegenüber der (nicht dargestellten) Zerspanungsmaschine fixiert gehalten werden, und der Rohrabschnitt 1 kann um eine in Längsrichtung L ausgerichtete Längsachse rotiert werden, oder der Rohrabschnitt 1 kann im Raum und gegenüber der Zerspanungsmaschine fixiert werden, und der Werkzeugkopf 2 kann um die Längsachse um den Rohrabschnitt 1 herum rotiert werden, und dabei rotiert die Schneidplatte 3 außen um den Rohrabschnitt 1 herum. Während des Rotationsvorganges hebt das Schneidwerkzeug Späne von einer Außenwandung 4 des Rohrabschnitts 1 ab. Während des Zerspanungsvorganges kommt es zu Lastwechseln der Zerspanungskräfte, beispielsweise dadurch, dass die Außenwandung 4 nicht exakt kreisförmig ist, was tatsächlich immer der Fall ist, so dass die abgehobenen Späne in der Realität geringfügig unterschiedliche Dicken aufweisen. Selbst bei ideal kreisförmigen Rohrabschnitten 1 wird es zu Lastwechseln kommen, die dazu führen, dass sich der Werkzeugkopf 2 zunächst in geringe Schwingbewegungen versetzt, die sich jedoch durch fortwährende relative Rotation von Werkzeugkopf 2 und Rohrabschnitt 1 periodisch verstärken können und zum sogenannten regenerativen Rattern führen.

Die Welligkeit der Außenfläche 4 des Rohrabschnitts 1 regt den Werkzeugkopf 2 periodisch immer wieder zu gleichen Schwingungen an. Üblicherweise rotieren Werkzeugköpfe 2 mit etwa 5.000 Umdrehungen/min; es sind jedoch auch andere Umdrehungszahlen denkbar. Insbesondere kann der Werkzeugkopf 2 mit einer geringeren, aber auch mit höherer Drehzahl gefahren werden. Der Werkzeugkopf 2 ist auf einer rotierenden, in Längsrichtung L ausgerichteten (nicht dargestellten) Spindel montiert und kann aus der Längsrichtung L herausschwingen. Das Schwingungsverhalten des Werkzeugkopfes 2 ist im Wesentlichen durch eine Steifigkeit c des auf der Spindel montierten Werkzeugkopfes 2, eine Dämpfung d und eine Masse m des Werkzeugkopfes 2 mit der Spindel bestimmt. Insbesondere ist eine Eigenfrequenz f_{eigen} des Werkzeugkopfes 2 eine Funktion dieser drei Parameter. Dabei meint Eigenfrequenz f_{eigen} die Eigenfrequenz, mit der der auf der Spindel montierte Werkzeugkopf 2 aus der Längsrichtung L herausschwingt.

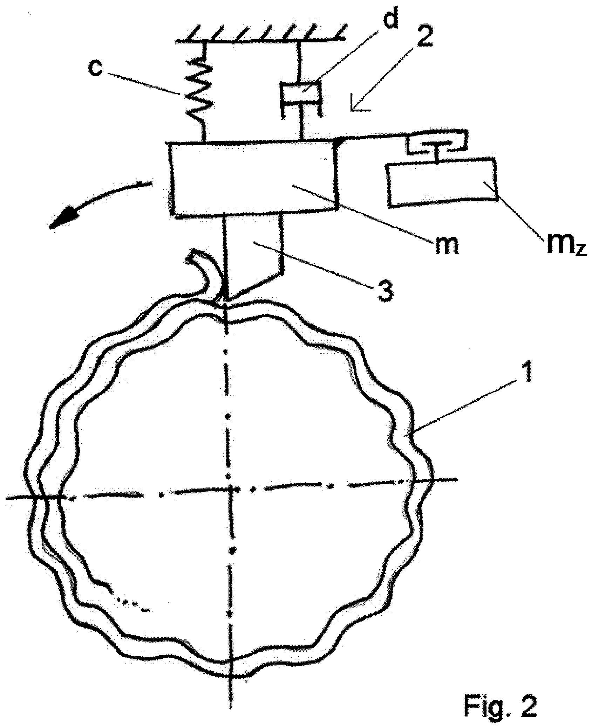

Die Erfindung macht von der Idee Gebrauch, wie in Fig. 2 gezeigt, eine Gesamtmasse des Werkzeugkopfes 2 zufällig und kurzzeitig um eine Zusatzmasse m_{z} zu verändern und dadurch das Schwingungsverhalten zufällig und kurzzeitig zu verändern.

Der Werkzeugkopf 2 wird um den in einer Aufnahme fest gespannten und fixierten Rohrabschnitt rotiert, und eine Gesamtmasse des Werkzeugkopfes 2 verändert sich, je nachdem, ob die Zusatzmasse m_{z} mit dem Werkzeugkopf 2 verbunden ist oder ihn nicht berührt und nicht mit ihm verbunden ist. Wenn die Zusatzmasse m_{z} mit dem Werkzeugkopf 2 verbunden ist, beispielsweise indem die Zusatzmasse m_{z} den Werkzeugkopf 2 berührt, verringert sich die Eigenfrequenz des Werkzeugkopfes 2; wenn die Zusatzmasse m_{z} keine Verbindung mit dem Werkzeugkopf 2 aufweist, erhöht sich die Eigenfrequenz des Werkzeugkopfes 2.

Durch die Veränderung des Schwingungsverhaltens des Werkzeugkopfes 2 wird gleichsam eine Störung im Zerspanungsvorgang eingeführt, die einer sich periodisch verstärkenden Schwingung entgegenwirkt. Ein periodisches Anregen des Werkzeugkopfes 2 durch Wellen in der Wandung der Rohrabschnitte 1 während der Rotationsbewegung führt zu keiner Resonanzkatastrophe in Forrm eines regenerativen Ratterns, weil sich die Resonanzfrequenz des Werkzeugkopfes 2 durch die Masseänderung ändert.

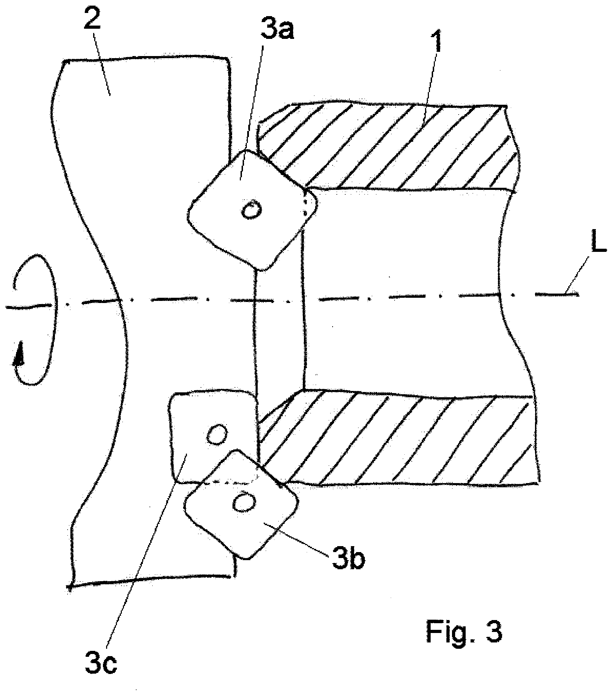

Fig. 3 zeigt ein Ende eines Rohrabschnittes 1. Dabei handelt es sich um ein Metallrohr. In das Metallrohr werden mit Hilfe des erfindungsgemäßen Werkzeugkopfes 2 mit Hilfe dreier Schneidplatten 3a, 3b, 3c eine Innenfase, eine Außenfase und ein Planmaß, und zwar in dieser Zuordnung, aufgebracht. Der Werkzeugkopf 2 rotiert gegenüber dem relativ zur Zerspanungsmaschine eingespannten Rohrabschnitt 1. Der Rohrabschnitt 1 und der Werkzeugkopf 2 weisen die gemeinsame Längsrichtung L auf. Der Werkzeugkopf 2 rotiert um eine in Längsrichtung L ausgerichtete Längsachse, die Längsachse entspricht der Längsachse des Rohrabschnitts 1.

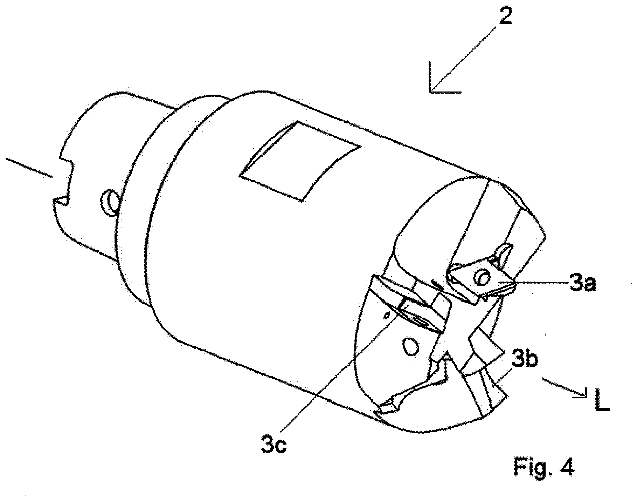

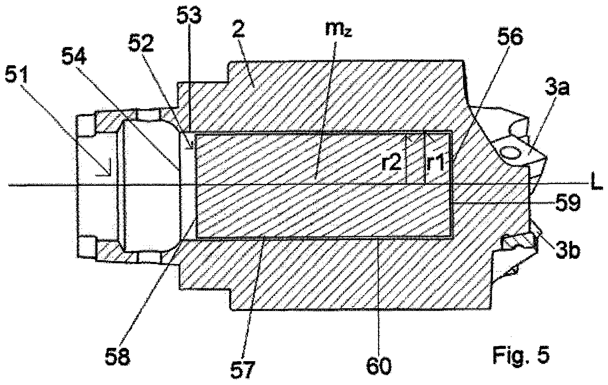

Fig. 4 zeigt den bekannten Werkzeugkopf 2 in einer Außenansicht. Die Figuren 4 und 5 dienen zur Erleichterung des Verständnisses der Erfindung. Dabei sind dem nicht dargestellten Rohrabschnitt 1 zugewandt drei Schneidplatten 3a, 3b, 3c vorgesehen, die in entsprechenden Halterungen auf dem Werkzeugkopf 2 austauschbar montiert sind. Der Werkzeugkopf ist um die Längsrichtung L in beide Richtungen rotierbar.

Fig. 5 zeigt den in Fig. 4 dargestellten Werkzeugkopf 2 in einer Schnittansicht in Längsrichtung L. Der Werkzeugkopf 2 weist ein Außengehäuse 50 mit der Werkzeugkopfmasse m auf. An einem Ende des Werkzeugkopfes 2 sind die drei Schneidplatten 3a, 3b, 3c angeordnet. An einem anderen Ende ist eine Aufnahme 51 vorgesehen, mit der der Werkzeugkopf 2 an der Zerspanungsmaschine aufgesetzt werden kann. Das eine und das andere Ende liegen sich vorzugsweise gegenüber.

Die Zusatzmasse m_{z} ist hier als ein lockerer, in einem Werkzeugkopf 2 angeordneter, zylindrisch ausgeformter Körper ausgebildet. Der Werkzeugkopf 2 weist einen Innenraum 52 mit einer zylindrischen Innenwandung 53 und zwei Stirnseiten 54, 56 auf. Die beiden Stirnseiten 54, 56 sind parallel zueinander und jeweils senkrecht auf der zylindrischen Innenwandung 53 angeordnet.

Im Querschnitt gemäß Fig. 5 ist der Innenraum 52 rechteckig ausgebildet. Die Maße des Rechteckes können von der dargestellten Form abweichen; es kann auch ein quadratischer Innenraumquerschnitt vorgesehen werden. Die Zusatzmasse m_{z} ist als Zylinder ausgebildet, wobei ein korrespondierender Radius r2 des Zylinders etwas kleiner ist als ein Radius r1 des zylindrischen Innenraumes 52, so dass die zylindrische Zusatzmasse m_{z} umlaufend entlang einer gesamten korrespondierenden Wandung 57 und auch an ihren Stirnseiten 58, 59 ein Spiel 60 aufweist, also gegenüber der zylindrischen Innenwandung 53 und gegenüber den Stirnseiten 54, 56 des Innenraumes beabstandet ist.

Fig. 5 zeigt den Werkzeugkopf 2 in einer der zweiten Stellungen, bei denen die Zusatzmasse m_{z} den Werkzeugkopf 2 nicht berührt. Wenn der Werkzeugkopf 2 nicht in Betrieb ist, befindet sich der Werkzeugkopf 2 in einer der ersten Stellungen, in denen die zylindrische Zusatzmasse m_{z} ihrer korrespondierenden Außenwandung 57 auf einem Abschnitt der Innenwandung 53 des Werkzeugkopfes 2 aufliegt. Während des Betriebes dreht sich der Werkzeugkopf 2 mit einer hohen Anzahl an Umdrehungen, beispielsweise 5.000 Umdrehungen/min. Während eines Anlaufvorganges schleift der Innenzylinder zunächst mit seiner korrespondierenden Außenwandung 57 auf der Innenwandung 53 des Werkzeugkopfes 2 so lange, bis der Innenzylinder durch Reibung die Umdrehungszahl des Werkzeugkopfes 2 aufgenommen hat. Während des Zerspanungsvorganges wird, in dem Moment, in dem sich ein regeneratives Rattern beginnt auszubilden, der Werkzeugkopf 2 in leichte Schwingungen versetzt. Diese Schwingungen verlaufen in Fig. 5 senkrecht zur in Längsrichtung L ausgerichteten Längsachse. Die Größe des Spiels 60 ist so bemessen, dass es höchstens die Amplitude des noch zulässigen Ratterns aufweist. Wenn der Werkzeugkopf 2 zu schwingen beginnt, gibt es während des Schwingvorganges Momente, in denen die zylindrische Zusatzmasse m_{z} überhaupt keinen Kontakt mit dem Werkzeugkopf 2 hat, also die korrespondierende Außenwandung 57 überall umlaufend beabstandet von der Innenwandung 53 des Werkzeugkopfes 2 angeordnet ist, so dass sich die Gesamtmasse m+m_{z} des Werkzeugkopfes 2 um die Zusatzmasse m_{z} zur Werkzeugkopfmasse m verringert. Dadurch verändert sich die Eigenfrequenz f_{eigen} des Werkzeugkopfes 2, wenn auch nur kurzzeitig, aber sie verändert sich, wodurch sich das Schwingungsverhalten des Werkzeugkopfes 2 verändert, so dass er durch periodische Anregungen nicht mehr sich aufschaukelnd angeregt werden kann und ein regeneratives Rattern verhindert wird.

Der Werkzeugkopf 2 mit berührender Zusatzmasse m_{z} hat eine Masse m+m_{z} und damit eine erste Eigenfrequenz f_{eigen}(c, d, m+m_{z}), und der Werkzeugkopf 2 ohne Berührung der Zusatzmasse m_{z} hat eine Masse m und eine zweite Eigenfrequenz f_{eigen}(c, d, m), die von der ersten Eigenfrequenz f_{eigen}(c, d, m+m_{z}) verschieden ist.

Versuche haben gezeigt, dass ein regeneratives Rattern durch die einfache Maßnahme, eine lockere Zusatzmasse m_{z} im Werkzeugkopf 2 vorzusehen, ausgesprochen effektiv verhindert werden kann.

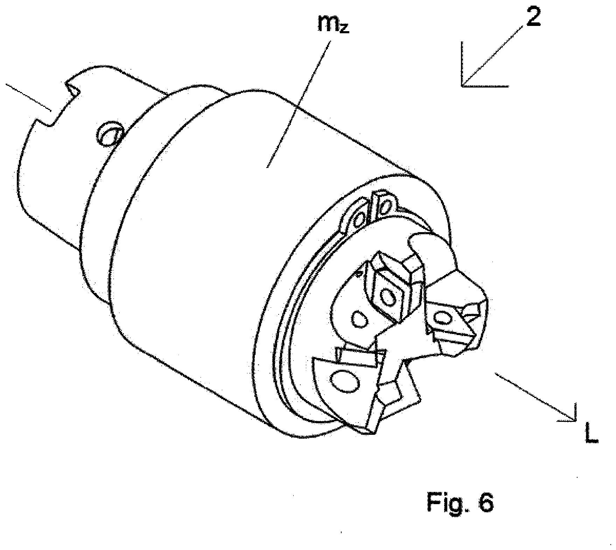

Fig. 6 zeigt eine Ausführungsform der Erfindung, bei der die lockere Zusatzmasse m_{z} außen als Außenring um den Werkzeugkopf 2 herumgelegt ist. Die Zusatzmasse m_{z} ist ringförmig ausgeformt und mit einer korrespondierenden Innenwandung 72 versehen, die in ersten Stellungen auf einer Außenwandung 71 eines in dem Abschnitt ebenfalls zylindrischen Werkzeugkopfes aufliegt.

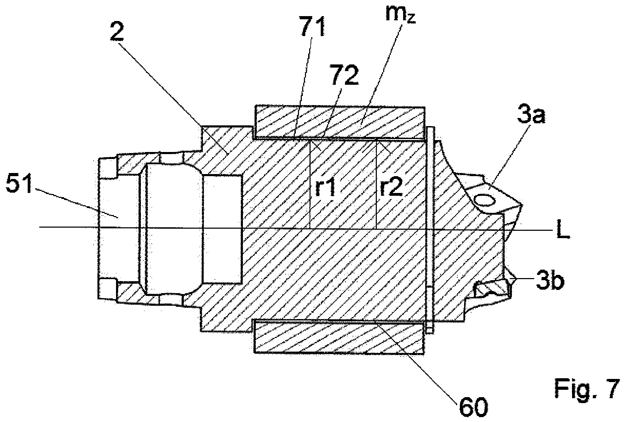

Fig. 7 zeigt den Werkzeugkopf 2 in Fig. 6 in einer Schnittansicht. Der Werkzeugkopf 2 weist die zylindrische Außenwandung 71 auf, die den Radius r1 aufweist, und die Zusatzmasse m_{z} ist ringförmig ausgebildet mit der ringförmigen korrespondierenden Innenwandung 72, die den korrespondierenden Radius r2 aufweist, der etwas größer als der Radius r1 ist. In zweiten Stellungen, von denen eine in der Fig. 7 dargestellt ist, weist die ringförmige Zusatzmasse m_{z} überhaupt keinen Kontakt und keine Verbindung mit dem Werkzeugkopf 2 auf. Sie ist um das Spiel 60 beabstandet.

Das Wirkungsprinzip ist dasselbe wie bei dem bekannten Werkzeugkopf gemäß Fig. 4. Üblicherweise liegt der Außenring mit seiner korrespondierenden Innenwandung 72 irgendwo an der Außenwandung 71 des Werkzeugkopfes 2 an, und der Werkzeugkopf 2 hat somit eine Masse m+m_{z}, die die Masse des Außenringes umfasst. Während des Zerspanungsvorganges wird der Werkzeugkopf 2 wieder zu Beginn des regenerativen Ratterns zu kleinen Schwingungen angeregt, und der Außenring macht aufgrund seiner Trägheit diese Schwingungen nicht mit, so dass es während kurzer Zeitdauern dazu kommt, dass die Außenwandung 71 des Werkzeugkopfes 2 überhaupt keinen Kontakt mit der korrespondierenden Innenwandung 72 des Außenringes aufweist und damit die Masse m des Werkzeugkopfes 2 um die Zusatzmasse m_{z} des Außenringes herabgesetzt wird und damit wiederum die Eigenfrequenz f_{eigen} des Werkzeugkopfes 2 verändert wird, die entscheidend durch die Masse m des Werkzeugkopfes bzw. m+m, bestimmt ist, wodurch auf sehr einfache Weise ein regeneratives Rattern verhindert wird.

### Bezugszeichenliste

- 1: Rohrabschnitt
- 2: Werkzeugkopf
- 3: Schneidplatte
- 3a: Schneidplatte
- 3b: Schneidplatte
- 3c: Schneidplatte
- 4: Außenwandung

- 50: Außengehäuse
- 51: Aufnahme
- 52: Innenraum
- 53: zylindrische Innenwandung
- 54: Stirnseite

- 56: Stirnseite
- 57: korrespondierende Wandung
- 58: Stirnseite
- 59: Stirnseite

- 60: Spiel

- 71: zylindrische Außenwandung
- 72: ringförmige korrespondierende Innenwandung

- c: Steifigkeit
- d: Dämpfung
- m: Masse
- m_{z}: Zusatzmasse
- r1: Radius
- r2: korrespondierender Radius
- f_{eigen}: Eigenfrequenz
- f_{eigen}(c,d,m): zweite Eigenfrequenz
- f_{eigen}(c,d,m+m_{z}): erste Eigenfrequenz

- L: Längsrichtung

## Patentansprüche

1. Verfahren zur Verringerung regenerativen Ratterns, indem
ein Rohrabschnitt (1) relativ zu einem Werkzeugkopf (2) mit wenigstens einem an einem Ende des Werkzeugkopfes (2) angeordneten Zerspanungswerkzeug (3, 3a, 3b, 3c) rotiert und Fasen in ein Ende des Rohrabschnitts (1) eingebracht werden, der Werkzeugkopf (2) mittels des wenigstens einen Zerspanungswerkzeugs (3, 3a, 3b, 3c) Wandungen des Rohrabschnitts (1) bearbeitet,
der Werkzeugkopf (2) während der Bearbeitung zu Schwingungen angeregt wird, durch die Schwingungen eine lockere Zusatzmasse (m_{z}) zufällig bewegt wird, die in ersten Stellungen den Werkzeugkopf (2) berührt und in zweiten Stellungen keine Verbindung mit dem Werkzeugkopf (2) aufweist und somit die Gesamtmasse des Werkzeugkopfes (2) um die Zusatzmasse (m_{z}) zufällig verändert wird und sich durch die Masseänderung das Schwingverhalten des Werkzeugkopfes (2) verändert und so dem regenerativen Rattern entgegengewirkt wird, und indem eine Aufnahme (51), mit der der Werkzeugkopf (2) auf eine Spindel austauschbar aufsetzbar ist, an einem anderen, dem einen Ende gegenüberliegenden Ende des Werkzeugkopfes (2) angeordnet wird, und die Zusatzmasse (m_{z}) ringförmig um eine Außenwandung (71) des Werkzeugkopfes (2) herumgelegt wird und die Außenwandung (71) des Werkzeugkopfes (2) im Querschnitt senkrecht zur Längsrichtung kreisförmig ausgebildet ist und die Außenwandung (71) des Werkzeugkopfes (2) einen Radius (r1) aufweist, während die Innenwandung (72) der ringförmigen Zusatzmasse (m_{z}) einen korrespondierenden Radius (r2) aufweist, der etwas größer als der Radius (r1) der Außenwandung (71) des Werkzeugkopfes (2) ist, so dass die ringförmige Zusatzmasse (m_{z}) ebenfalls locker auf der Außenwandung (71) des Werkzeugkopfes (2) aufliegt, **dadurch gekennzeichnet, dass** an einem Ende des Werkzeugkopfes (2) drei Schneidplatten (3a, 3b, 3c) vorgesehen werden, wobei eine Schneidplatte (3a) zum Aufbringen einer Innenfase geeignet ist, eine Schneidplatte (3b) zum Aufbringen einer Außenfase geeignet ist und eine Schneidplatte (3c) zum Aufbringen eines Planmaßes geeignet ist.

2. Zerspanungsmaschine mit
einem Werkzeugkopf (2) mit wenigstens einem an einem Ende des Werkzeugkopfes (2) angeordneten Zerspanungswerkzeug (3, 3a, 3b, 3c) zur Bearbeitung einer Wandung eines Rohrabschnitts (1),
einer lockeren Zusatzmasse (m_{z}), die gegenüber dem Werkzeugkopf (2) zufällig verschiedene Stellungen aufweisen kann und die den Werkzeugkopf (2) in ersten Stellungen berührt und die in zweiten Stellungen keine Verbindung mit dem Werkzeugkopf (2) aufweist, wobei der Werkzeugkopf (2) in den ersten Stellungen ein erstes Schwingverhalten und in den zweiten Stellungen ein zweites Schwingverhalten aufweist und mit einer Aufnahme (51) an einem anderen, dem einen Ende gegenüberliegenden Ende des Werkzeugkopfes (2), mit der der Werkzeugkopf (2) auf eine Spindel austauschbar aufsetzbar ist und die Zusatzmasse (m_{z}) ringförmig um eine Außenwandung (71) des Werkzeugkopfes (2) herumgelegt ist und die Außenwandung (71) des Werkzeugkopfes (2) im Querschnitt senkrecht zur Längsrichtung kreisförmig ausgebildet ist und die Außenwandung (71) des Werkzeugkopfes (2) einen Radius (r1) aufweist, während die Innenwandung (72) der ringförmigen Zusatzmasse (m_{z}) einen korrespondierenden Radius (r2) aufweist, der etwas größer als der Radius (r1) der Außenwandung (71) des Werkzeugkopfes (2) ist, so dass die ringförmige Zusatzmasse (m_{z}) ebenfalls locker auf der Außenwandung (71) des Werkzeugkopfes (2) aufliegt, **dadurch gekennzeichnet, dass** an einem Ende des Werkzeugkopfes (2) drei Schneidplatten (3a, 3b, 3c) vorgesehen sind, wobei eine Schneidplatte (3a) zum Aufbringen einer Innenfase geeignet ist, eine Schneidplatte (3b) zum Aufbringen einer Außenfase geeignet ist und eine Schneidplatte (3c) zum Aufbringen eines Planmaßes geeignet ist.

3. Zerspanungsmaschine nach Anspruch 2,
**dadurch gekennzeichnet, dass** der Werkzeugkopf (2) eine in Betrieb um eine Längsachse rotierende Wandung (71) aufweist und die Zusatzmasse (m_{z}) eine rotierende korrespondierende Wandung (72) aufweist, die entlang ihrer gesamten Ausdehnung in den zweiten Stellungen von der rotierenden Wandung (71) des Werkzeugkopfes (2) beabstandet ist.

4. Zerspanungsmaschine nach Anspruch 3,
**dadurch gekennzeichnet, dass** die Wandung des Werkzeugkopfes (71) zylindrisch ausgeformt ist und die korrespondierende Wandung (72) ebenfalls zylindrisch ausgeformt ist.

## Claims

1. Method for reducing regenerative chatter in that a pipe section (1) rotates in relation to a tool head (2) having at least one chip-removal tool (3, 3a, 3b, 3c) arranged at one end of the tool head (2) and chamfers are introduced into one end of the pipe section (1), the tool head (2) machines walls of the pipe section (1) by means of the at least one chip-removal tool (3, 3a, 3b, 3c), the tool head (2) is vibrationally excited during the machining, a loose additional mass (m_{z}) is moved randomly by the vibrations, which additional mass touches the tool head (2) in first positions and has no connection to the tool head (2) in second positions, and thus the total mass of the tool head (2) is randomly changed by the amount of the additional mass (m_{z}) and the vibrational behaviour of the tool head (2) is changed because of the mass change and thus counteracts the regenerative chatter, and in that a receptacle (51), by means of which the tool head (2) can be exchangeably placed onto a spindle, is arranged at another end of the tool head (2) opposite the one end and the additional mass (m_{z}) is placed in an annular manner around an outer wall (71) of the tool head (2) and the outer wall (71) of the tool head (2) is circular in cross-section perpendicular to the longitudinal direction and the outer wall (71) of the tool head (2) has a radius (r1), while the inner wall (72) of the annular additional mass (m_{z}) has a corresponding radius (r2) which is slightly larger than the radius (r1) of the outer wall (71) of the tool head (2), so that the annular additional mass (m_{z}) also rests loosely on the outer wall (71) of the tool head (2), **characterized in that** three cutting plates (3a, 3b, 3c) are provided at one end of the tool head (2), wherein a cutting plate (3a) is suitable for applying an internal chamfer, a cutting plate (3b) is suitable for applying an outer chamfer and a cutting plate (3c) is suitable for applying a flat face.

2. Chip-removal machine with a tool head (2) with at least one chip-removal tool (3, 3a, 3b, 3c) arranged on one end of the tool head (2) for machining a wall of a pipe section (1), a loose additional mass (m_{z}) which can have randomly different positions relative to the tool head (2) and which touches the tool head (2) in first positions and which has no connection to the tool head (2) in second positions, wherein the tool head (2) has a first vibrational behaviour in the first positions and a second vibrational behaviour in the second positions and with a receptacle (51), by means of which the tool head (2) can be exchangeably placed onto a spindle, is arranged at another end of the tool head (2) opposite the one end, and the additional mass (m_{z}) is placed in an annular manner around an outer wall (71) of the tool head (2) and the outer wall (71) of the tool head (2) is circular in cross-section perpendicular to the longitudinal direction and the outer wall (71) of the tool head (2) has a radius (r1), while the inner wall (72) of the annular additional mass (m_{z}) has a corresponding radius (r2), which is slightly larger than the radius (r1) of the outer wall (71) of the tool head (2), so that the annular additional mass (m_{z}) also rests loosely on the outer wall (71) of the tool head (2), **characterized in that** three cutting plates (3a, 3b, 3c) are provided at one end of the tool head (2), wherein a cutting plate (3a) is suitable for applying an internal chamfer, a cutting plate (3b) is suitable for applying an outer chamfer, and a cutting plate (3c) is suitable for applying a flat face.

3. Chip-removal machine according to claim 2, **characterised in that** the tool head (2) has a wall (71) which, in operation, rotates about a longitudinal axis and the additional mass (m_{z}) has a rotating corresponding wall (72), which, along its entire extent, in the second positions is spaced apart from the rotating wall (71) of the tool head (2).

4. Chip-removal machine according to claim 3, **characterised in that** the wall (71) of the tool head is cylindrically shaped and the corresponding wall (72) is likewise cylindrically shaped.

## Revendications

1. Procédé pour la réduction du broutage régénératif,
cependant qu'un tronçon de tube (1) est en rotation avec au moins un outil de coupe (3, 3a, 3b, 3c) placé à une extrémité de la tête d'outil (2) et des chanfreins sont introduits dans une extrémité du tronçon de tube (1),
la tête d'outil (2) usine des parois du tronçon de tube (1) au moyen du au moins un outil de coupe (3, 3a, 3b, 3c),
la tête d'outil (2) est excitée en oscillations pendant l'usinage,
une masse supplémentaire meuble (m_{z}) est déplacée de manière aléatoire par les oscillations, masse qui touche la tête d'outil (2) dans des premières positions et qui, dans des secondes positions, ne présente pas de jonction avec la tête d'outil (2) et l'ensemble de la masse de la tête d'outil (2) est modifiée de manière aléatoire autour de la masse supplémentaire (m_{z}) et le comportement oscillatoire de la tête d'outil (2) est modifié par la variation de la masse et neutralise le broutage régénératif et cependant qu'un logement (51), avec lequel la tête d'outil (2) peut être placée de manière remplaçable sur une broche, est placé à une autre extrémité de la tête d'outil (2) opposée à l'extrémité, et la masse supplémentaire (m_{z}) est enroulée en forme d'anneau autour d'une paroi extérieure (71) de la tête d'outil et la section transversale de la paroi extérieure (71) de la tête d'outil (2) est configurée circulaire perpendiculairement au sens longitudinal et la paroi extérieure (71) de la tête d'outil (2) présente un rayon (r1), tandis que la paroi intérieure (72) de la masse supplémentaire circulaire (m_{z}) présente un rayon correspondant (r2) qui est légèrement plus grand que le rayon (r1) de la paroi extérieure (71) de la tête d'outil (2) si bien que la masse supplémentaire circulaire (m_{z}) repose également de manière meuble sur la paroi extérieure (71) de la tête d'outil (2),
**caractérisé en ce qu'**il est prévu trois plaques de coupe (3a, 3b, 3c) à une extrémité de la tête d'outil (2), une plaque de coupe (3a) étant appropriée pour appliquer un chanfrein intérieur, une plaque de coupe (3b) étant appropriée pour appliquer un chanfrein extérieur et une plaque de coupe (3c) étant appliquée pour appliquer une dimension à respecter.

2. Machine de coupe avec
une tête d'outil (2) avec au moins un outil de coupe (3, 3a, 3b, 3c) placé à une extrémité de la tête d'outil (2) pour usiner une paroi d'un tronçon de tube (1),
une masse supplémentaire meuble (m_{z}) qui peut présenter différentes positions de manière aléatoire par rapport à la tête d'outil (2) et qui touche la tête d"outil (2) dans des premières positions et qui ne présente pas de jonction avec la tête d'outil (2) dans des secondes positions, cependant que la tête d'outil (2) présente, dans les premières positions, un premier comportement face aux oscillations et, dans les secondes positions, un second comportement face aux oscillations et avec un logement (51) à une autre extrémité de la tête d'outil (2) opposée à l'extrémité, avec lequel la tête d'outil (2) peut être placée de manière remplaçable sur une broche et la masse supplémentaire (m_{z}) est enroulée en forme d'anneau autour d'une paroi extérieure (71) de la tête d'outil (2) et la section transversale de la paroi extérieure (71) de la tête d'outil (2) est configurée circulaire perpendiculairement au sens longitudinal et la paroi extérieure (71) de la tête d'outil (2) présente un rayon (r1), tandis que la paroi intérieure (72) de la masse supplémentaire circulaire (m_{z}) présente un rayon correspondant (r2) qui est légèrement plus grand que le rayon (r1) de la paroi extérieure (71) de la tête d'outil (2) si bien que la masse supplémentaire circulaire (m_{z}) repose également de manière meuble sur la paroi extérieure (71) de la tête d'outil (2),
**caractérisée en ce qu'**il est prévu trois plaques de coupe (3a, 3b, 3c) à une extrémité de la tête d'outil (2), une plaque de coupe (3a) étant appropriée pour appliquer un chanfrein intérieur, une plaque de coupe (3b) étant appropriée pour appliquer un chanfrein extérieur et une plaque de coupe (3c) étant appliquée pour appliquer une dimension à respecter.

3. Machine de coupe selon la revendication 2,
**caractérisée en ce que** la tête d'outil (2) présente une paroi rotative (71) en fonctionnement, autour d'un axe longitudinal et la masse supplémentaire (m_{z}) présente une paroi rotative correspondante (72) qui est espacée de la paroi rotative (71) de la tête d'outil (2) le long de son extension totale dans les secondes positions.

4. Machine de coupe selon la revendication 3,
**caractérisée en ce que** la paroi de la tête d'outil (71) est formée cylindrique et la paroi correspondante (72) est formée également cylindrique.
